# EUROPEAN PATENT APPLICATION

(11) **EP 4 521 167 A1**
(43) Date of publication of application: **12.03.2025**
(21) Application number: 24197474.0
(22) Date of filing: 30.08.2024
(51) Int. Cl.: G03B 21/20

(54) **LIGHT SOURCE APPARATUS AND PROJECTOR**

(30) Priority: 01.09.2023 JP 2023142436
(71) Applicant: Seiko Epson Corporation, Tokyo 160-8801 (JP)
(72) Inventor: YOKOO, Tomohiro, Suwa-shi, 392-8502 (JP); NAKAGOMI, Yoichi, Suwa-shi, 392-8502 (JP)
(74) Representative: Lewis Silkin LLP

(57) **Abstract**

A light source apparatus includes a first light source emitting first light, a wavelength converter converting the first light into second light, a first light transmissive member guiding the second light, a first optical layer transmitting the first light and reflecting the second light, and a first reflective member reflecting the first light and the second light. The wavelength converter has a first surface on which the first light is incident via the first optical layer and the first light transmissive member. The first light transmissive member has a second surface that faces the first surface, and a third surface and a fourth surface that intersect with the second surface and face opposite sides. The third surface faces the first reflective member. The second light travels through an interior of the first light transmissive member and exits via the fourth surface.

## Description

The present application is based on, and claims priority from JP Application Serial Number 2023-142436, filed September 1, 2023, the disclosure of which is hereby incorporated by reference herein in its entirety.

### BACKGROUND

### 1. Technical Field

The present disclosure relates to a light source apparatus and a projector.

### 2. Related Art

As a light source apparatus used in a projector, there has been a proposed light source apparatus using fluorescence emitted from a phosphor when the phosphor is irradiated with excitation light emitted from a light emitter. WO 2006/054203 discloses a light source apparatus that includes a flat-plate-shaped wavelength conversion member containing a phosphor and a light emitting diode (LED) that emits excitation light, and the light source apparatus is so configured that the excitation light is incident on a large-area light incident surface that is one of the multiple surfaces of the wavelength conversion member, and that fluorescence exits via a small-area light exiting surface of the wavelength conversion member.

WO 2006/054203 is an example of the related art.

In the light source apparatus described above, the generated fluorescence is totally reflected off the interface between the surface of the wavelength conversion member and the air layer, travels through the interior of the wavelength conversion member, and exits via the light exiting surface. There has, however, been a problem of a decrease in the efficiency at which the fluorescence is used because components of the fluorescence that have not been totally reflected off the interface between the wavelength conversion member and the air layer become leakage light.

### SUMMARY

To solve the problem described above, a light source apparatus according to an aspect of the present disclosure includes: a first light source configured to emit first light within a first wavelength band; a wavelength converter configured to convert the first light into second light within a second wavelength band different from the first wavelength band; a first light transmissive member disposed between the first light source and the wavelength converter and configured to guide the second light into which the first light is converted by the wavelength converter; a first optical layer disposed between the first light source and the first light transmissive member and configured to transmit the first light and reflect the second light; and a first reflective member configured to reflect the first light and the second light. The wavelength converter has a first surface on which the first light is incident via the first optical layer and the first light transmissive member. The first light transmissive member has a second surface that faces the first surface, and a third surface and a fourth surface that intersect with the second surface and face opposite sides. The third surface faces the first reflective member. The second light into which the first light is converted by the wavelength converter travels through an interior of the first light transmissive member and exits via the fourth surface.

A projector according to another aspect of the present disclosure includes: the light source apparatus according to the aspect described above; a light modulator configured to modulate light emitted from the light source apparatus; and a projection optical apparatus configured to project the light modulated by the light modulator.

### BRIEF DESCRIPTION OF THE DRAWINGS

FIG. 1 shows a schematic configuration of a projector according to a first embodiment.
FIG. 2 is a side cross-sectional view showing a schematic configuration of a first illuminator.
FIG. 3 is a cross-sectional view taken along the arrowed line III-III in FIG. 2.
FIG. 4 shows the behavior of light in a light source apparatus.
FIG. 5 is a plan view of the light source apparatus viewed in the direction from a +X side toward a -X side.
FIG. 6 is a cross-sectional view showing a schematic configuration of a light source apparatus according to a second embodiment.
FIG. 7 is a cross-sectional view showing a schematic configuration of a light source apparatus according to a third embodiment.
FIG. 8 is a cross-sectional view showing a schematic configuration of a light source apparatus according to a fourth embodiment.

### DESCRIPTION OF EMBODIMENTS

A first Embodiment of the present disclosure will be described below.

A projector according to an embodiment of the present disclosure is an example of a projector using liquid crystal panels as light modulators.

In the following drawings, elements may be drawn at different dimensional scales for clarity of each of the elements.

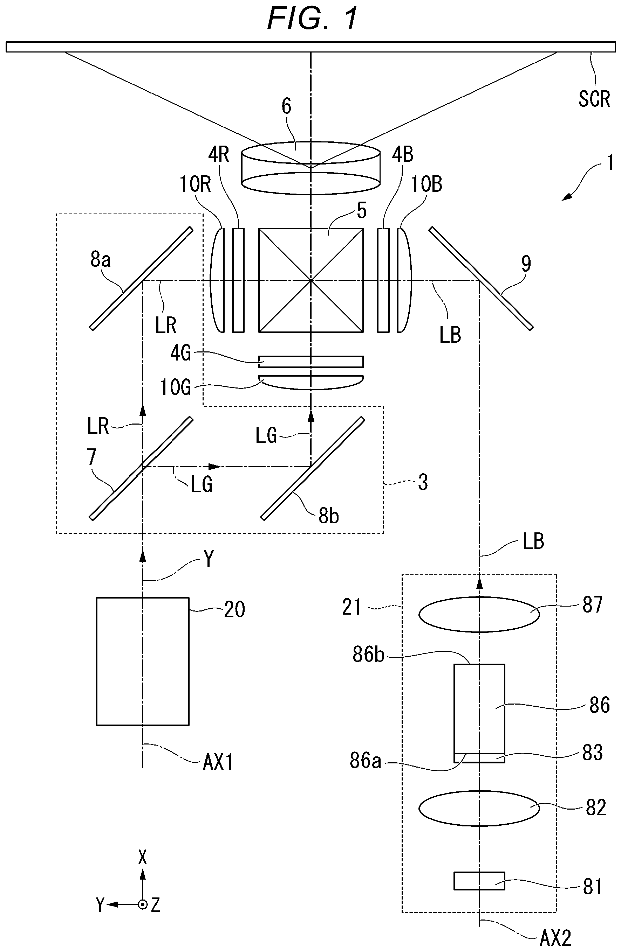

FIG. 1 shows a schematic configuration of a projector 1 according to the present embodiment.

The projector 1 according to the present embodiment is a projection-type image display apparatus that displays a color image on a screen SCR, which is a projection receiving surface, as shown in FIG. 1. The projector 1 includes three light modulators corresponding to three types of color light, red light LR, green light LG, and blue light LB.

The projector 1 includes a first illuminator 20, a second illuminator 21, a color separation system 3, a light modulator 4R, a light modulator 4G, a light modulator 4B, a light combiner 5, and a projection optical apparatus 6.

The first illuminator 20 outputs yellow fluorescence Y toward the color separation system 3. The second illuminator 21 emits the blue light LB toward the light modulator 4B. Detailed configurations of the first illuminator 20 and the second illuminator 21 will be described later.

The description with reference to the drawings will hereinafter be made by using an XYZ orthogonal coordinate system as required. The Z-axis is an axis extending along a vertical direction of the projector 1. The X-axis is an axis parallel to an optical axis AX1 of the first illuminator 20 and an optical axis AX2 of the second illuminator 21. The Y-axis is an axis perpendicular to the X-axis and the Z-axis. The optical axis AX1 of the first illuminator 20 is a center axis of the fluorescence Y output from the first illuminator 20. The optical axis AX2 of the second illuminator 21 is a center axis of the blue light LB output from the second illuminator 21. One of the two directions along the X-axis is referred to as a +X direction, the opposite direction to the +X direction is referred to as a -X direction, one of the two directions along the Y-axis is referred to as a +Y direction, the opposite direction to the +Y direction is referred to as a -Y direction, one of the two directions along the Z-axis is referred to as a +Z direction, and the opposite direction to the +Z direction is referred to as a -Z direction. The two directions along the X-axis are referred to as an X-axis direction when not distinguished from each other but are collectively referred to, the two directions along the Y-axis are referred to as a Y-axis direction when not distinguished from each other but are collectively referred to, and the two directions along the Z-axis are referred to as a Z-axis direction when not distinguished from each other but are collectively referred to.

The color separation system 3 separates the yellow fluorescence Y output from the first illuminator 20 into the red light LR and the green light LG. The color separation system 3 includes a dichroic mirror 7, a first reflection mirror 8a, and a second reflection mirror 8b.

The dichroic mirror 7 separates the fluorescence Y into the red light LR and the green light LG. The dichroic mirror 7 transmits the red light LR and reflects the green light LG. The second reflection mirror 8b is disposed in the light path of the green light LG. The second reflection mirror 8b reflects the green light LG reflected off the dichroic mirror 7 toward the light modulator 4G. The first reflecting mirror 8a is disposed in the light path of the red light LR. The first reflecting mirror 8a reflects the red light LR, which has been transmitted through the dichroic mirror 7, toward the light modulator 4R.

In contrast, the blue light LB output from the second illuminator 21 is reflected off a reflection mirror 9 toward the light modulator 4B.

The configuration of the second illuminator 21 will be described below.

The second illuminator 21 includes a light source section 81, a light collection lens 82, a diffuser plate 83, a rod lens 86, and a relay lens 87. The light source section 81 is configured with at least one semiconductor laser. The light source section 81 outputs the blue light LB, which is laser light. The light source section 81 is not necessarily configured with a semiconductor laser, and may be configured with an LED that emits blue light.

The light collection lens 82 is configured with a convex lens. The light collection lens 82 causes the blue light LB output from the light source section 81 to be incident on the diffuser plate 83 with the blue light LB substantially collected at the diffuser plate 83. The diffuser plate 83 diffuses the blue light LB output from the light collection lens 82 with a predetermined degree of diffusion to generate the blue light LB having a substantially uniform light distribution similar to that of the fluorescence Y output from the first illuminator 20. The diffuser plate 83 is, for example, a ground glass plate made of optical glass.

The blue light LB diffused by the diffuser plate 83 enters the rod lens 86. The rod lens 86 has a prismatic shape extending along the direction of the optical axis AX2 of the second illuminator 21. The rod lens 86 has a light incident end surface 86a provided at one end and a light exiting end surface 86b provided at the other end. The diffuser plate 83 is fixed to the light incident end surface 86a of the rod lens 86 via an optical adhesive (not shown). It is desirable that the refractive index of the diffuser plate 83 coincides as much as possible with the refractive index of the rod lens 86.

The blue light LB propagates through the interior of the rod lens 86 while being totally reflected therein and exits via the light exiting end surface 86b with the blue light LB having enhanced uniformity of the illuminance distribution. The blue light LB output from the rod lens 86 enters the relay lens 87. The relay lens 87 causes the blue light LB having the illuminance distribution enhanced in uniformity by the rod lens 86, to be incident on the reflection mirror 9.

The light exiting end surface 86b of the rod lens 86 has a rectangular shape substantially similar to the shape of an image formation region of the light modulator 4B. The blue light LB output from the rod lens 86 is thus efficiently incident on the image formation region of the light modulator 4B.

The light modulator 4R modulates the red light LR in accordance with image information to form image light corresponding to the red light LR. The light modulator 4G modulates the green light LG in accordance with image information to form image light corresponding to the green light LG. The light modulator 4B modulates the blue light LB in accordance with image information to form image light corresponding to the blue light LB.

The light modulators 4R, 4G, and 4B are each, for example, a transmissive liquid crystal panel. Polarizers (not shown) are disposed at a light incident side and a light exiting side of each of the liquid crystal panels. The polarizers each only transmit linearly polarized light polarized in a specific direction.

A field lens 10R is disposed at the light incident side of the light modulator 4R. A field lens 10G is disposed at the light incident side of the light modulator 4G. A field lens 10B is disposed at the light incident side of the light modulator 4B. The field lens 10R parallelizes the light flux of the red light LR to be incident on the light modulator 4R. The field lens 10G parallelizes the light flux of the green light LG to be incident on the light modulator 4G. The field lens 10B parallelizes the light flux of the blue light LB to be incident on the light modulator 4B.

When the image light output from the light modulator 4R, the image light output from the light modulator 4G, and the image light output from the light modulator 4B enter the light combiner 5, the light combiner 5 combines the image light corresponding to the red light LR, the image light corresponding to the green light LG, and the image light corresponding to the blue light LB with one another and outputs the combined image light toward the projection optical apparatus 6. The light combiner 5 is, for example, a cross dichroic prism.

The projection optical apparatus 6 is configured with multiple projection lenses. The projection optical apparatus 6 enlarged the combined image light produced by the light combiner 5 and projects the enlarged image light toward the screen SCR. A color image is thus displayed on the screen SCR.

The configuration of the first illuminator 20 will subsequently be described.

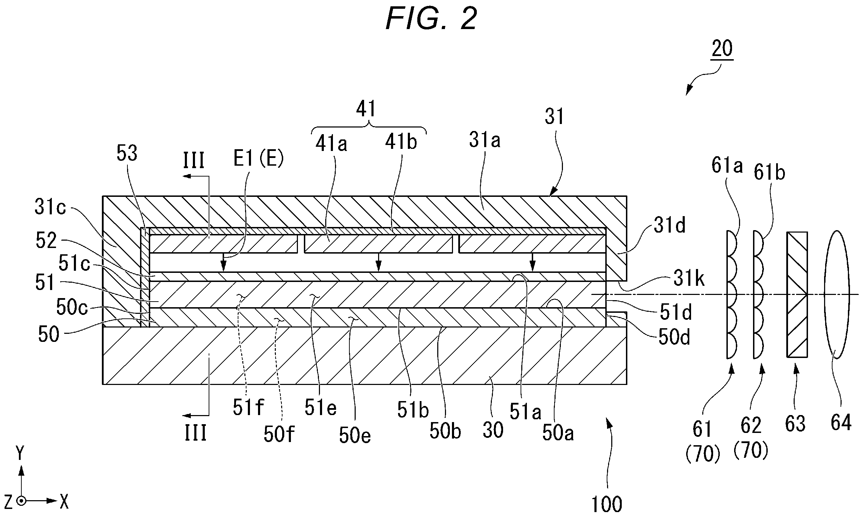

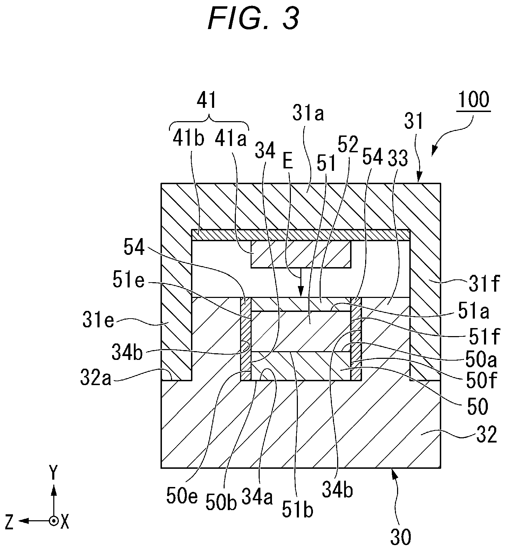

FIG. 2 is a side cross-sectional view showing a schematic configuration of the first illuminator 20. FIG. 3 is a cross-sectional view taken along the arrowed line III-III in FIG. 2.

The first illuminator 20 includes a light source apparatus 100, an optical integration system 70, a polarization converter 63, and a superimposing system 64, as shown in FIG. 2.

The light source apparatus 100 includes a support member 30, an enclosure 31, a first light source 41, a wavelength converter 50, a first light transmissive member 51, a first optical layer 52, a first reflective member 53, and a pair of second reflective members 54.

The support member 30 supports the wavelength converter 50. The support member 30 functions as a heat dissipation member that diffuses and dissipates heat of the wavelength converter 50. That is, the wavelength converter 50 is coupled to the support member 30 in a heat transferrable manner. It is therefore desirable that the support member 30 be made of a material that has predetermined strength and high thermal conductivity. It is desirable to use metal such as aluminum or stainless steel, in particular, an aluminum alloy such as a 6061 aluminum alloy as the material of the support member 30.

According to the configuration described above, since the heat of the wavelength converter 50 is dissipated via the support member 30, an increase in the temperature of the wavelength converter 50 can be suppressed.

The support member 30 includes a base section 32 and a support section 33, as shown in FIG. 3. The base section 32 is a plate-shaped member that forms a primary element of the support member 30, and has a longitudinal direction that coincides with the X-axis direction. The support section 33 is provided at a surface 32a of the base section 32, which is the surface facing the +Y side. The support section 33 has a groove 34, which supports the wavelength converter 50. The groove 34 extends in the X-axis direction along the longitudinal direction of the support section 33 and accommodates the wavelength converter 50. The groove 34 in the present embodiment has a depth deep enough to accommodate the first light transmissive member 51 and the first optical layer 52 along with the wavelength converter 50. The groove 34 has a bottom surface 34a along the XZ plane, and a pair of inner wall surfaces 34b separate from each other in the Z-axis direction and extending along the XY plane. The pair of second reflective members 54, which will be described later, are disposed at the inner wall surfaces 34b of the groove 34.

The enclosure 31 is a member that constitutes along with the support member 30 the exterior of the light source apparatus 100. The enclosure 31 has a substantially box-like shape having one open surface. The enclosure 31 includes a top wall section 31a, a first sidewall section 31c, a second sidewall section 31d, a third sidewall section 31e, a fourth sidewall section 31f, and a light drawing port 31k.

The top wall section 31a is disposed along the XZ plane.

The first sidewall section 31c and the second sidewall section 31d intersect with the X-axis extending along the longitudinal direction of the wavelength converter 50 and are located at sides opposite to each other in the X-axis direction. In the present embodiment, the first sidewall section 31c is located at the -X side, which is one side of the X-axis direction, and the second sidewall section 31d is located at the +X side, which is the opposite side of the X-axis direction.

The third sidewall section 31e and the fourth sidewall section 31f are located at sides opposite to each other in the Z-axis direction, which intersects the longitudinal direction of the wavelength converter 50. In the present embodiment, the third sidewall section 31e is located at the +Z side, which is one side of the Z-axis direction, and the fourth sidewall section 31f is located at the -Z side, which is the opposite side of the Z-axis direction.

In the present embodiment, the first light source 41 is disposed at the top wall section 31a of the enclosure 31. The first reflective member 53 is disposed at the first sidewall section 31c of the enclosure 31. The light drawing port 31k is provided in the second sidewall section 31d of the enclosure 31. The light drawing port 31k is an opening through which light output from the first light transmissive member 51 is drawn out of the enclosure 31.

In the present embodiment, the top wall section 31a is coupled to the first light source 41 in a heat transferrable manner. It is therefore desirable that the enclosure 31 is made of a material having predetermined strength and high thermal conductivity. It is desirable, as the support member 30, that the enclosure 31 is made of metal such as aluminum or stainless steel, in particular, an aluminum alloy such as a 6061 aluminum alloy.

The enclosure 31 is disposed so as to cover the support section 33 of the support member 30 and abut against the surface 32a of the base section 32 of the support member 30. That is, the enclosure 31 covers the first optical layer 52, the first light transmissive member 51, and the wavelength converter 50 supported by the groove 34. Note that the enclosure 31 and the support member 30 are fixed to each other via a fixing member such as an adhesive or screws.

The light source apparatus 100 according to the present embodiment thus realizes a configuration in which the enclosure 31 and the support member 30 allow the light source apparatus 100 to accommodate the first optical layer 52, the first light transmissive member 51, and the wavelength converter 50, as well as the first light source 41. The configuration can suppress adhesion of dust and other foreign matter to the first optical layer 52, the first light transmissive member 51, and the wavelength converter 50.

The first light source 41 includes multiple first light emitters 41a and a substrate 41b. The multiple first light emitters 41a are mounted on the substrate 41b. The number of first light emitters 41a is not limited to a specific number, and the first light source 41 may include only one first light emitter 41a.

The first light emitters 41a each emit an excitation light beam E1 within a first wavelength band. The first light emitters 41a are each constituted, for example, of a light emitting diode (LED). The first light emitters 41a each face the wavelength converter 50 and emit the excitation light beam E1 toward the wavelength converter 50. The first wavelength band is, for example, a blue-violet wavelength band ranging from 400 nm to 480 nm and has a peak wavelength of, for example, 445 nm. The multiple first light emitters 41a are arranged along the longitudinal direction of the wavelength converter 50. The first light source 41 in the present embodiment thus outputs excitation light E containing the multiple blue excitation light beams E1.

The wavelength converter 50 has the shape of an elongated plate extending along the X-axis and has six surfaces. Among the sides of the wavelength converter 50, the sides extending along the X-axis are longer than the sides extending along the Y-axis and the sides extending along the Z-axis. The X-axis corresponds to the longitudinal direction of the wavelength converter 50. The Y-axis corresponds to the shortest side among the sides of the wavelength converter 50. The sides along the Y-axis is shorter than the sides along the Z-axis. That is, the wavelength converter 50 has a rectangular cross-sectional shape taken along a plane along the YZ plane, as shown in FIG. 3.

The wavelength converter 50 has a front surface 50a, a rear surface 50b, a first end surface 50c, a second end surface 50d, a first side surface 50e, and a second side surface 50f. The front surface 50a and the rear surface 50b intersect with the Y-axis and are located at opposite sides in the Y-axis direction. In the present embodiment, the front surface 50a is a surface located at the +Y side, which is one side of the Y-axis direction along the Y-axis. The rear surface 50b is a surface located at the -Y side, which is the opposite side of the Y-axis direction, and is in contact with the bottom surface 34a of the groove 34 of the support member 30. That is, the rear surface 50b of the wavelength converter 50 is the surface coupled to the support member 30 in a heat transferrable manner. The front surface 50a is a surface on which the excitation light E is incident via the first optical layer 52 and the first light transmissive member 51. In the present embodiment, the front surface 50a of the wavelength converter 50 corresponds to the "first surface" in the claims.

Note that a reflection film may be formed at the rear surface 50b of the wavelength converter 50 to reflect the fluorescence Y exiting via the rear surface 50b back into the wavelength converter 50.

The first end surface 50c and the second end surface 50d intersect with the front surface 50a and the rear surface 50b and are located at opposite sides in the X-axis direction along the longitudinal direction of the wavelength converter 50. In the present embodiment, the first end surface 50c is located at the -X side, which is the one side of the X-axis direction, and the second end surface 50d is located at the +X side, which is the opposite side of the X-axis direction.

The first side surface 50e and the second side surface 50f intersect with the front surface 50a and the rear surface 50b as well as the first end surface 50c and the second end surface 50d, and are located at opposite sides in the Z-axis direction. In the present embodiment, the first side surface 50e is located at the +Z side, which is the one side of the Z-axis direction, and the second side surface 50f is located at the -Z side, which is the opposite side of the Z-axis direction.

The wavelength converter 50 at least includes a yellow phosphor, and converts the excitation light E, which is emitted from the light emitters 41a of the first light source 41 and has the first wavelength band, into the yellow fluorescence Y, which has a second wavelength band different from the first wavelength band. The wavelength converter 50 is so configured that the excitation light E is incident via the front surface 50a, and that the fluorescence Y exits via the front surface 50a into the first light transmissive member 51. The excitation light E in the present embodiment corresponds to the "first light" in the claims.

The wavelength converter 50 contains a ceramic phosphor that is a polycrystalline phosphor that converts the excitation light E in terms of wavelength into the fluorescence Y. The wavelength converter 50 includes, for example, scatterers such as pores or fillers. The wavelength converter 50 in the present embodiment is therefore configured with a light scattering phosphor. The second wavelength band to which the fluorescence Y belongs is a yellow wavelength band ranging, for example, from 490 to 750 nm. That is, the fluorescence Y is yellow fluorescence containing a red light component and a green light component. The fluorescence Y in the present embodiment corresponds to the "second light" in the claims.

The wavelength converter 50 may include a single crystal phosphor in place of a polycrystalline phosphor. The wavelength converter 50 may instead be made of fluorescent glass. The wavelength converter 50 may still instead be configured with a binder which is made of glass or resin and in which a large number of phosphor particles are dispersed. The wavelength converter 50 made of any of the materials described above converts the excitation light E into the fluorescence Y.

Specifically, the material of the wavelength converter 50 contains, for example, an yttrium-aluminum-garnet-based (YAG-based) phosphor. Consider YAG:Ce, which contains cerium (Ce) as an activator, by way of example, and the wavelength converter 50 is made, for example, of a material produced by mixing raw powder materials containing Y₂O₃, Al₂O₃, CeO₃, and other constituent elements with one another and causing the mixture to go through a solid-phase reaction, Y-Al-O amorphous particles produced by using a coprecipitation method, a sol-gel method, or any other wet method, or YAG particles produced by using a spray-drying method, a flame-based thermal decomposition method, a thermal plasma method, or any other gas-phase method.

The first light transmissive member 51 is disposed between the first light source 41 and the wavelength converter 50, and guides the fluorescence Y, into which the excitation light E has been converted by the wavelength converter 50. Specifically, the first light transmissive member 51 is provided at the front surface 50a of the wavelength converter 50.

The first light transmissive member 51 is made, for example, of borosilicate acid glass such as BK7, quartz, synthetic quartz, quartz crystal, SiC, GaN, MgO, YAG, sapphire, or diamond. The first light transmissive member 51 in the present embodiment is made, for example, of quartz.

The first light transmissive member 51 has a shape similar to the shape of the wavelength converter 50. Specifically, the first light transmissive member 51 has the shape of an elongated plate extending along the X-axis and has six surfaces. The first light transmissive member 51 has a longitudinal direction in the X-axis direction, and has a rectangular cross-sectional shape taken along a plane along the YZ plane, as shown in FIG. 3.

The first light transmissive member 51 has a front surface 51a, a rear surface 51b, a first end surface 51c, a second end surface 51d, a first side surface 51e, and a second side surface 51f. The front surface 51a and the rear surface 51b intersect with the Y-axis and are located at opposite sides in the Y-axis direction. In the present embodiment, the front surface 51a is located at the +Y side, which is the one side of the Y-axis direction along the Y-axis, and the rear surface 51b is located at the -Y side, which is the opposite side of the Y-axis direction. The front surface 51a is a surface on which the excitation light E is incident via the first optical layer 52, which will be described later. The rear surface 51b is a surface facing the front surface 50a of the wavelength converter 50. That is, the rear surface 51b of the first light transmissive member 51 corresponds to the "second surface" in the claims.

The first end surface 51c and the second end surface 51d intersect with the front surface 51a and the rear surface 51b and face opposite sides of the X-axis direction along the longitudinal direction of the first light transmissive member 51. In the present embodiment, the first end surface 51c is located at the -X side, which is the one side of the X-axis direction, and the second end surface 51d is located at the +X side, which is the opposite side of the X-axis direction. That is, the first end surface 51c and the second end surface 51d correspond to the "third surface" and the "fourth surface" in the claims.

The first side surface 51e and the second side surface 51f intersect with the front surface 51a and the rear surface 51b as well as the first end surface 51c and the second end surface 51d, and face opposite sides in the Z-axis direction. In the present embodiment, the first side surface 51e is located at the +Z side, which is the one side of the Z-axis direction, and the second side surface 51f is located at the -Z side, which is the opposite side of the Z-axis direction. That is, the first side surface 51e and the second side surface 51f correspond to the "fifth surface" and the "sixth surface" in the claims.

The first optical layer 52 is disposed between the first light source 41 and the first light transmissive member 51, and has optical characteristics that cause the first optical layer 52 to transmit the excitation light E and reflect the fluorescence Y. The first optical layer 52 in the present embodiment is provided at the front surface 51a of the first light transmissive member 51, and is constituted, for example, of a dielectric multilayer film.

The first reflective member 53 is located at the -X side of the first light transmissive member 51 and the wavelength converter 50 in the X-axis direction, as shown in FIG. 2. The first reflective member 53 is provided at the first sidewall section 31c of the support member 30 so as to face the first end surface 51c of the first light transmissive member 51 and the first end surface 50c of the wavelength converter 50. Note that the first reflective member 53 may be directly provided at the first end surface 51c of the first light transmissive member 51 and the first end surface 50c of the wavelength converter 50 instead of the first sidewall section 31c.

The first reflective member 53 reflects the fluorescence Y having been guided through the interior of the first light transmissive member 51 and having reached the first end surface 51c. The first reflective member 53 further reflects the excitation light E having been scattered at the front surface 50a of the wavelength converter 50 and guided through the interior of the first light transmissive member 51, and has reached the first end surface 51c. That is, the first reflective member 53 reflects the fluorescence Y and the excitation light E. The first reflective member 53 is constituted, for example, of a metal film, a dielectric multilayer film, or a scattering member made of barium sulfate.

The pair of second reflective members 54 are located at the opposite sides of the first light transmissive member 51 and the wavelength converter 50 in the Z-axis direction, as shown in FIG. 3. One of the pair of second reflective members 54 is provided at one of the inner wall surfaces 34b of the groove 34 provided in the support portion 33 so as to face the first side surface 50e of the wavelength converter 50 and the first side surface 51e of the first light transmissive member 51. The other of the pair of second reflective members 54 is provided at the other inner wall surface 34b of the groove 34 provided in the support portion 33 so as to face the second side surface 50f of the wavelength converter 50 and the second side surface 51f of the first light transmissive member 51. Note that the second reflective members 54 may be directly provided at the wavelength converter 50 and the first light transmissive member 51 instead of the inner wall surfaces 34b of the groove 34.

The second reflective members 54 reflect the excitation light E having been scattered at the front surface 50a of the wavelength converter 50 and entered the first light transmissive member 51 and having reached the first side surface 51e or the second side surface 51f, and cause the reflected excitation light E to enter the wavelength converter 50. The efficiency at which the excitation light E is converted into the fluorescence Y can thus be increased. The second reflective members 54 reflect the fluorescence Y having reached the first side surface 51e or the second side surface 51f of the first light transmissive member 51. The second reflective members 54 reflect the fluorescence Y having exited via the first side surface 50e or the second side surface 50f of the wavelength converter 50 toward the wavelength converter 50 or the first light transmissive member 51. The fluorescence Y having returned to the wavelength converter 50 is scattered therein and output to the first light transmissive member 51. That is, the second reflective members 54 reflect the fluorescence Y and the excitation light E. The second reflective members 54 are constituted, for example, of a metal film, a dielectric multilayer film, or a scattering member.

The behavior of the light in the light source apparatus 100 according to the present embodiment will be subsequently described.

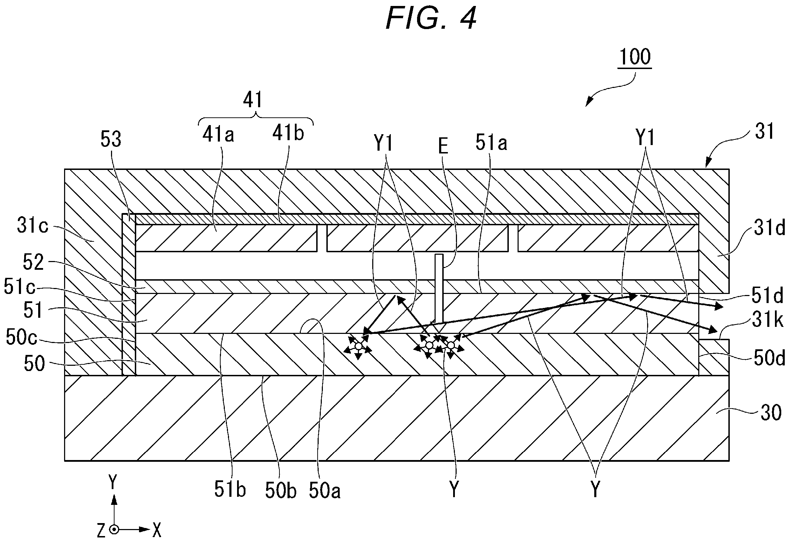

FIG. 4 shows the behavior of the light in the light source apparatus 100.

In the light source apparatus 100 according to the present embodiment, the excitation light E output from the first light source 41 passes through the first optical layer 52 and the first light transmissive member 51 and enters the wavelength converter 50, as shown in FIG. 4. Part of the excitation light E is back-scattered at the front surface of the wavelength converter 50 and returns toward the first light source 41, but is reflected off the first optical layer 52 and the first light transmissive member 51 and enters the wavelength converter 50.

When the excitation light E enters the wavelength converter 50, the phosphor contained in the wavelength converter 50 is excited, and emits the fluorescence Y from random light emission points. In this process, the excitation light E having entered the phosphor is diffused and propagates to a region wider than the region on which the excitation light E incident, so that the width of the region from which the fluorescence Y is emitted widens, that is, what is called a smear of the fluorescence Y is created.

The fluorescence Y output via the front surface 50a of the wavelength converter 50 enters the first light transmissive member 51, is reflected off the first optical layer 52 provided at the front surface 51a of the first light transmissive member 51, and exits via the second end surface 51d. That is, in the light source apparatus 100 according to the present embodiment, the fluorescence Y propagates through the interior of the first light transmissive member 51 while repeatedly scattered by the wavelength converter 50 and reflected off the first optical layer 52, and exits via the second end surface 51d.

The light source apparatus 100 can thus output the fluorescence Y generated by the wavelength converter 50 out of the enclosure 31 via the light drawing port 31k.

Part of fluorescence Y1 emitted in a variety of directions due to the smear exits into the first light transmissive member 51 so as to travel toward the first end surface 51c opposite to the second end surface 51d, and is reflected off the first optical layer 52 and therefore enters the wavelength converter 50 again. The fluorescence Y1 having entered the wavelength converter 50 is scattered and therefore converted into a variety of angular components. Part of the converted fluorescence Y1 having the variety of angular components is reflected off the first optical layer 52 provided at the front surface 51a of the first light transmissive member 51, and exits via the second end surface 51d.

The fluorescence Y having been reflected between the first optical layer 52 and the wavelength converter 50, having traveled through the interior of the first light transmissive member 51, and having reached the first end surface 51c is reflected off the first reflective member 53 toward the second end surface 51d, enters the wavelength converter 50, is scattered in the wavelength converter 50, and eventually exits via the second end surface 51d. The excitation light E having been scattered at the front surface 50a of the wavelength converter 50, having traveled through the interior of the first light transmissive member 51, and having been incident on the first end surface 51c is reflected off the first reflective member 53, enters the wavelength converter 50, and is used to convert the excitation light E into the fluorescence Y in the wavelength converter 50.

In the light source apparatus 100 according to the present embodiment, most of the components of the fluorescence Y exit via the second end surface 51d of the first light transmissive member 51, whereas a very small amount of fluorescence Y exits via the second end surface 50d of the wavelength converter 50, and slightly exits via the second end surface 50d in the vicinity of the front surface 50a.

In the light source apparatus 100 according to the present embodiment, the fluorescence Y, into which the excitation light E has been converted by the wavelength converter 50, travels through the interior of the first light transmissive member 51 and exits via the second end surface 51d.

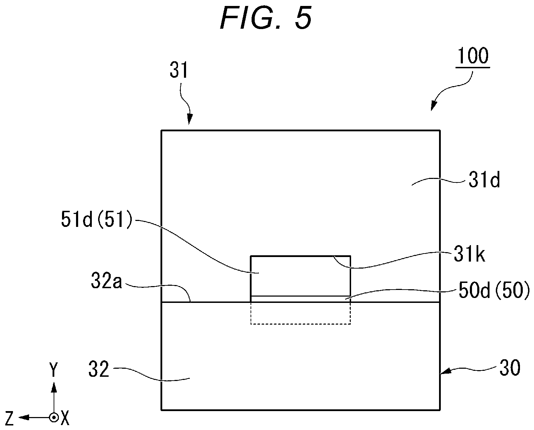

FIG. 5 is a plan view of the light source apparatus 100 viewed in the direction from the +X side toward the -X side. That is, FIG. 5 is a plan view of the light source apparatus 100 viewed in the X-axis direction along the direction of a normal to the second end surface 51d of the first light transmissive member 51. The plan view viewed in the X-axis direction with reference to FIG. 5 is hereinafter simply referred to as a plan view.

The fluorescence Y that exits via the second end surface 51d of the first light transmissive member 51 is drawn out of the enclosure 31 via the light drawing port 31k provided in the second sidewall section 31d of the enclosure 31, as shown in FIG. 5. In the plan view as shown in FIG. 5, the light drawing port 31k overlaps the first light transmissive member 51 and the wavelength converter 50. Specifically, the light drawing port 31k has a size that exposes the entire second end surface 51d of the first light transmissive member 51, and the second end surface 50d of the wavelength converter 50 in the vicinity of the front surface 50a. That is, the light drawing port 31k overlaps with the entire second end surface 51d of the first light transmissive member 51 and a part of the second end surface 50d of the wavelength converter 50 in the plan view, and has a minimum size corresponding to the region from which the fluorescence Y is emitted.

As described above, the light source apparatus 100 according to the present embodiment can draw the fluorescence Y output via the second end surface 51d of the first light transmissive member 51 and the second end surface 50d of the wavelength converter 50 out of the light source apparatus 100 via the minimum light drawing port 31k. The light source apparatus 100 according to the present embodiment, in which the etendue of the fluorescence Y is reduced, can therefore reduce the loss of the fluorescence Y in the optical integration system 70 and other downstream optical members. As a result, the fluorescence Y from the light source apparatus 100 can be used with improved efficiency.

In the present embodiment, the first light transmissive member 51 and the wavelength converter 50 are fixed to each other with a light transmissive optical adhesive. Since no air layer is interposed between the first light transmissive member 51 and the wavelength converter 50, optical reflection at the interface between the first light transmissive member 51 and the wavelength converter 50 can be suppressed. The optical adhesive can transmit the excitation light E having passed through the first light transmissive member 51 and cause the excitation light E to efficiently enter the wavelength converter 50, and can also transmit the fluorescence Y emitted from the wavelength converter 50 and cause the fluorescence Y to efficiently enter the first light transmissive member 51.

In the present embodiment, the refractive index of the first light transmissive member 51 (1.4: quartz) is smaller than the refractive index of the wavelength converter 50 (YAG: 1.7). The material of the first light transmissive member 51 that satisfies the condition described above is, for example, borosilicate acid glass such as BK7, synthetic quartz, or quartz crystal in addition to quartz. According to the configuration described above, when the fluorescence Y is incident on the first light transmissive member 51 from the wavelength converter 50, the first light transmissive member 51 refracts the fluorescence Y, so that the angle of the fluorescence Y with respect to the X-axis along the longitudinal axis of the first light transmissive member 51 decreases. That is, the fluorescence Y propagating through the interior of the first light transmissive member 51 is incident on the second end surface 51d perpendicular to the X-axis at a small angle. The first light transmissive member 51 can therefore efficiently output the fluorescence Y via the second end surface 51d.

Note that the first light transmissive member 51 may be made of a material having thermal conductivity higher than that of the wavelength converter 50. Examples of the material of the first light transmissive member 51 that satisfies the condition described above include SiC, GaN, MgO, YAG, sapphire, and diamond. According to the configuration described above, since the heat of the wavelength converter 50 is efficiently transferred to the first light transmissive member 51, an increase in the temperature of the wavelength converter 50 can be suppressed. A decrease in light emission efficiency due to an increase in the temperature of the wavelength converter 50 can thus be suppressed.

As described above, the light source apparatus 100 according to the present embodiment includes the first light source 41, which outputs the excitation light E within a blue wavelength band, the wavelength converter 50, which converts the excitation light E into the fluorescence Y within a yellow wavelength band different from the blue wavelength band, the first light transmissive member 51, which is disposed between the first light source 41 and the wavelength converter 50 and guides the fluorescence Y, into which the excitation light E has been converted by the wavelength converter 50, the first optical layer 52, which is disposed between the first light source 41 and the first light transmissive member 51, transmits the excitation light E, and reflects the fluorescence Y, and the first reflective member 53, which reflects the excitation light E and the fluorescence Y. The wavelength converter 50 has the front surface 50a, on which the excitation light E is incident via the first optical layer 52 and the first light transmissive member 51. The first light transmissive member 51 has the rear surface 51b, which faces the front surface 50a, and the first end surface 51c and the second end surface 51d, which intersect with the rear surface 51b and faces opposite sides. The first end surface 51c faces the first reflective member 53, and the fluorescence Y, into which the excitation light E has been converted by the wavelength converter 50, travels through the interior of the first light transmissive member 51 and exits via the second end surface 51d.

The light source apparatus 100 according to the present embodiment, in which the fluorescence Y reflected off the first optical layer 52 is scattered in the wavelength converter 50, allows the fluorescence Y having a changed angular distribution to propagate through the interior of the first light transmissive member 51. The fluorescence Y can therefore be incident on the second end surface 51d of the first light transmissive member 51 at an angle smaller than the critical angle.

The light source apparatus 100 according to the present embodiment can thus realize a configuration in which the fluorescence Y is efficiently drawn out as compared with a case where the fluorescence Y propagates through the interior of the first light transmissive member 51 while being totally reflected.

The projector 1 according to the present embodiment includes the first illuminator 20 including the light source apparatus 100, which efficiently draws out the fluorescence Y, and therefore excels in light use efficiency.

### Second Embodiment

The configuration of a projector according to a second embodiment will be subsequently described. The difference between the present embodiment and the first embodiment is the configuration of the light source apparatus. The configuration of the light source apparatus will therefore be primarily described below. Note that elements common to those in the first embodiment have the same reference characters and will not be described.

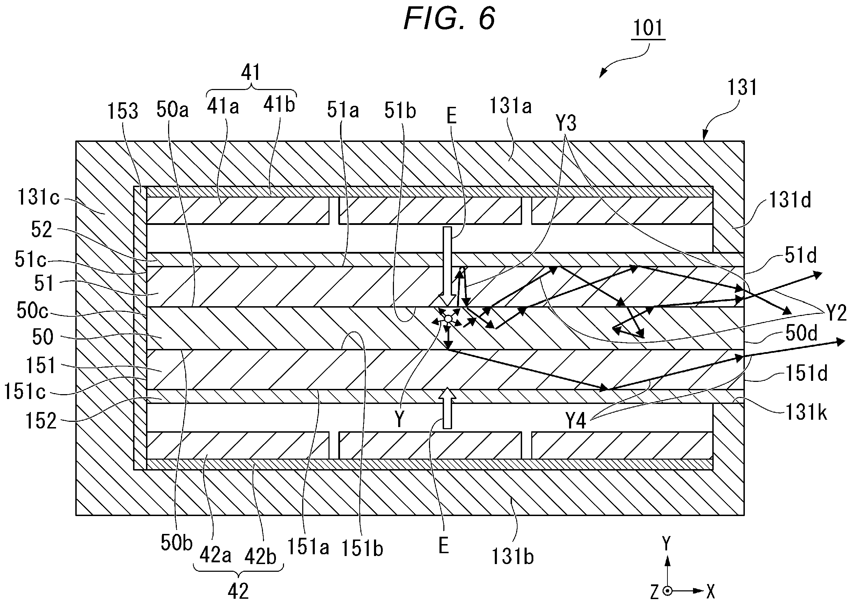

FIG. 6 is a cross-sectional view showing a schematic configuration of a light source apparatus 101 according to the present embodiment.

The light source apparatus 101 according to the present embodiment includes an enclosure 131, the first light source 41, a second light source 42, the wavelength converter 50, the first light transmissive member 51, a second light transmissive member 151, the first optical layer 52, a second optical layer 152, a first reflective member 153, and a pair of second reflective members, as shown in FIG. 6.

The enclosure 131 constitutes the exterior of the light source apparatus 101. The enclosure 131 covers the first light source 41, the second light source 42, the wavelength converter 50, the first light transmissive member 51, and the second light transmissive member 151 to accommodate these components. The enclosure 131 has a box-like shape and includes a top wall section 131a, a bottom wall section 131b, a first sidewall section 131c, a second sidewall section 131d, a third sidewall section, a fourth sidewall section, and a light drawing port 131k.

The top wall section 131a is disposed along the XZ plane. The bottom wall section 131b is disposed so as to face the top wall section 131a. The first sidewall section 131c is located at the -X side, which is the one side of the X-axis direction, and the second sidewall section 31d is located at the +X side, which is the opposite side of the X-axis direction.

The third and fourth sidewall sections, which are not shown, are located at opposite sides in the Z-axis direction, which intersects with the longitudinal direction of the wavelength converter 50. The third sidewall section is located at the +Z side, which is the one side of the Z-axis direction, and the fourth sidewall section is located at the -Z side, which is the opposite side of the Z-axis direction.

In the present embodiment, the first light source 41 is disposed at the top wall section 131a of the enclosure 131 in a heat transferrable manner, and the second light source 42 is disposed at the bottom wall section 131b of the enclosure 131 in a heat transferrable manner. The light drawing port 131k is provided in the second sidewall section 131d of the enclosure 131.

In the present embodiment, the light drawing port 131k holds the first optical layer 52, the first light transmissive member 51, the wavelength converter 50, the second light transmissive member 151, and the second optical layer 152. In the present embodiment, in the plan view of the light source apparatus 101 viewed in the X-axis direction along the direction of a normal to the second end surface 51d of the first light transmissive member 51, the light drawing port 131k overlaps with the first light transmissive member 51, the wavelength converter 50, and the second light transmissive member 151. Specifically, the light drawing port 131k has a size that exposes the second end surface 51d of the first light transmissive member 51, the second end surface 50d of the wavelength converter 50, and a second end surface 151d of the second light transmissive member 151.

In the X-axis direction, the opening end of the light drawing port 131k is flush with the second end surface 51d of the first light transmissive member 51, the second end surface 50d of the wavelength converter 50, and the second end surface 151d of the second light transmissive member 151.

The second light source 42 is disposed at the -Y side opposite to the first light source 41 with respect to the wavelength converter 50, and outputs the excitation light E. The second light source 42 is configured in the same manner as the first light source 41. The second light source 42 therefore includes multiple second light emitters 42a, which each emit an excitation light beam within the first wavelength band, and a substrate 42b.

The second light transmissive member 151 is disposed between the second light source 42 and the wavelength converter 50, and guides the fluorescence Y, into which the excitation light E has been converted by the wavelength converter 50. Specifically, the second light transmissive member 151 is provided at the rear surface 50b of the wavelength converter 50. The second light transmissive member 151 is configured in the same manner as the first light transmissive member 51.

The second light transmissive member 151 therefore has the shape of an elongated plate extending along the X-axis and has six surfaces. The second light transmissive member 151 has a front surface 151a, a rear surface 151b, a first end surface 151c, a second end surface 151d, a first side surface, and a second side surface.

The second optical layer 152 is disposed between the second light source 42 and the second light transmissive member 151, and has optical characteristics that cause the second optical layer 152 to transmit the excitation light E and reflect the fluorescence Y. The second optical layer 152 in the present embodiment is provided at the front surface 151a, which will be described later, of the second light transmissive member 151, and is constituted, for example, of a dielectric multilayer film.

In the present embodiment, the excitation light E output from the second light source 42 is incident on the rear surface 50b of the wavelength converter 50 via the second optical layer 152 and the second light transmissive member 151. That is, the rear surface 50b of the wavelength converter 50 corresponds to the "seventh surface" in the claims.

The second light transmissive member 151 in the present embodiment is so configured that the rear surface 151b is located at the +Y side, which is the one side of the Y-axis direction along the Y-axis, and the front surface 151a is located on the -Y side, which is the opposite side of the Y-axis direction. The front surface 151a is a surface on which the excitation light E is incident via the second optical layer 152. The rear surface 151b is a surface facing the rear surface 50b of the wavelength converter 50. That is, the rear surface 151b of the second light transmissive member 151 corresponds to the "eighth surface" in the claims.

In the present embodiment, the first end surface 151c and the second end surface 151d intersect with the front surface 151a and the rear surface 151b and face opposite sides in the X-axis direction along the longitudinal direction of the second light transmissive member 151. In the present embodiment, the first end surface 151c is located at the -X side, which is the one side of the X-axis direction, and the second end surface 151d is located at the +X side, which is the opposite side of the X-axis direction. That is, the first end surface 151c and the second end surface 151d correspond to the "ninth surface" and the "tenth surface" in the claims.

The first reflective member 153 is located at the -X side of the first light transmissive member 51, the second light transmissive member 151, and the wavelength converter 50 in the X-axis direction. The first reflective member 153 is provided at the first sidewall section 131c of the enclosure 131 so as to face the first end surface 51c of the first light transmissive member 51, the first end surface 151c of the second light transmissive member 151, and the first end surface 50c of the wavelength converter 50.

Although not shown, in the present embodiment, the pair of second reflective members are located at the opposite sides of the first light transmissive member 51, and second light transmissive member 151, and the wavelength converter 50 in the Z-axis direction. One of the second reflective members is provided at the third sidewall section of the enclosure 131 so as to face the first side surface 50e of the wavelength converter 50, the first side surface 51e of the first light transmissive member 51, and the first side surface of the second light transmissive member 151. The other of the second reflective members is provided at the fourth sidewall section of the enclosure 131 so as to face the second side surface 50f of the wavelength converter 50, the second side surface 51f of the first light transmissive member 51, and the second side surface of the second light transmissive member 151.

The behavior of the light in the light source apparatus 101 according to the present embodiment will be subsequently described. In the following description, the fluorescence Y generated by the excitation light E from the first light source 41 and the fluorescence Y generated by the excitation light E from the second light source 42 show the same behavior, and the behavior of the fluorescence Y will therefore be described with reference to the excitation light E output from the first light source 41.

In the light source apparatus 101 according to the present embodiment, fluorescence Y2 emitted from the wavelength converter 50 enters the first light transmissive member 51, is reflected off the first optical layer 52 provided at the front surface 51a of the first light transmissive member 51, and exits via the second end surface 51d.

Fluorescence Y3 emitted via the front surface 50a of the wavelength converter 50 in the direction of a normal thereto passes through the first light transmissive member 51, is reflected off the first optical layer 52, and returns to the wavelength converter 50. The fluorescence Y3 scattered and therefore angularly converted in the wavelength converter 50 enters the first light transmissive member 51, is reflected off the first optical layer 52, and exits via the second end surface 51d.

Part of fluorescence Y4 passes through the second light transmissive member 151, is reflected off the second optical layer 152, and exits via the second end surface 151d. The fluorescence Y having been reflected between the second optical layer 152 and the wavelength converter 50, having traveled through the interior of the second light transmissive member 151, and having reached the first end surface 151c is reflected off the first reflective member 153 toward the second end surface 151d, enters the wavelength converter 50, is angularly converted by the wavelength converter 50, and eventually exits via the second end surface 151d.

Also in the present embodiment, the fluorescence Y having been reflected between the first optical layer 52 and the wavelength converter 50, having traveled through the interior of the first light transmissive member 51, and having reached the first end surface 51c is reflected off the first reflective member 153 toward the second end surface 51d, enters the wavelength converter 50, is scattered in the wavelength converter 50, and eventually exits via the second end surface 51d. The excitation light E having been scattered at the front surface 50a of the wavelength converter 50, having traveled through the interior of the first light transmissive member 51, and having been incident on the first end surface 51c is reflected off the first reflective member 153, enters the wavelength converter 50, and is used to convert the excitation light E into the fluorescence Y in the wavelength converter 50.

The light source apparatus 101 according to the present embodiment, in which the excitation light E is incident both on the front surface 50a and the rear surface 50b of the wavelength converter 50, allows an increase in the amount of excitation light E that enters the wavelength converter 50. Note that it becomes more difficult to draw out the fluorescence Y generated at the side opposite to the light drawing port as the length of the wavelength converter 50 in the X-axis direction increases. Therefore, when the length of the wavelength converter 50 is increased in the X-axis direction to increase the area on which the excitation light E is incident, the fluorescence Y may not be efficiently drawn out. In contrast, in the light source apparatus 101 according to the present embodiment, the amount of excitation light E that enters the wavelength converter 50 is increased without an increase in the length of the wavelength converter 50 in the X-axis direction, so that the generated fluorescence can be efficiently drawn out with the fluorescence conversion efficiency increased.

In the light source apparatus 100 according to the first embodiment, in which the reflection film formed at the rear surface 50b of the wavelength converter 50 causes the fluorescence Y to return into the wavelength converter 50, the reflection film formed at the uneven rear surface 50b is not likely to provide sufficient reflection film performance but is likely to absorb the fluorescence Y.

In contrast, in the present embodiment, the fluorescence Y output via the rear surface 50b of the wavelength converter 50 is reflected between the second optical layer 152, which is configured with a dielectric multilayer film, and the wavelength converter 50 and propagates through the interior of the second light transmissive member 151, so that the fluorescence Y can be efficiently drawn out. In addition, the second optical layer 152 is formed at the front surface 151a, which has a smooth surface, of the second light transmissive member 151, therefore provides high reflection film performance, and can efficiently reflect the fluorescence Y.

### Third Embodiment

The configuration of the projector according to a third embodiment will be subsequently described. The difference between the present embodiment and the second embodiment is the configuration of the light source apparatus. The configuration of the light source apparatus will therefore be primarily described below. Note that elements common to those in the first embodiment have the same reference characters and will not be described.

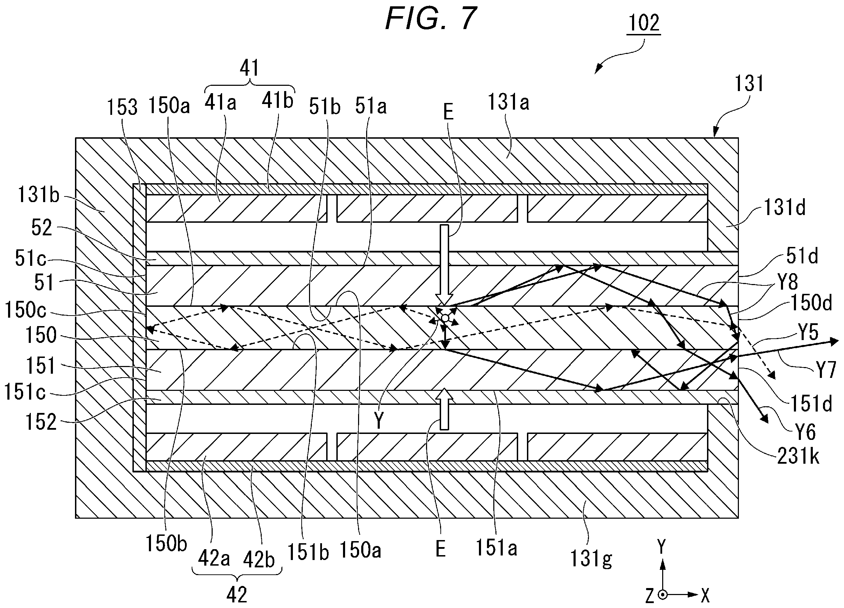

FIG. 7 is a cross-sectional view showing a schematic configuration of a light source apparatus 102 according to the present embodiment.

The light source apparatus 102 according to the present embodiment differs from the light source apparatus 101 according to the second embodiment in terms of the configuration of the wavelength converter but is the same as the light source apparatus 101 in terms of the other points. The following description will therefore focus on the behavior of light due to the difference in the wavelength converter.

The light source apparatus 102 according to the present embodiment includes the enclosure 131, the first light source 41, the second light source 42, a wavelength converter 150, the first light transmissive member 51, the second light transmissive member 151, the first optical layer 52, the second optical layer 152, the first reflective member 153, and a pair of second reflective members, as shown in FIG. 7.

The wavelength converter 150 in the present embodiment is configured with a transparent phosphor. The transparent phosphor used herein refers, for example, to a phosphor having total light transmittance higher than or equal to 80% for fluorescence. The transparent phosphor may be a transparent single crystal or polycrystal having total light transmittance higher than or equal to 80% as described above, and may, for example, be a YAG-ceramic-based ceramic phosphor produced by sintering multiple YAG phosphor particles. The wavelength converter 150 converts the wavelength of the excitation light E incident from the first light source 41 and the second light source 42 to generate the fluorescence Y.

The wavelength converter 150 in the present embodiment has a front surface 150a, a rear surface 150b, a first end surface 150c, a second end surface 150d, a first side surface, and a second side surface, the latter two of which are not shown, as the wavelength converter 50.

The behavior of the light in the light source apparatus 102 according to the present embodiment will be subsequently described. The following description will be made with reference to the excitation light E output from the first light source 41.

In the light source apparatus 102 according to the present embodiment, fluorescence Y5 emitted from the wavelength converter 150 is totally reflected off the interface between the wavelength converter 150 and the first light transmissive member 51 or the second light transmissive member 151, propagates through the interior of the wavelength converter 150, and exits via the second end surface 150d of the wavelength converter 150.

Fluorescence Y6 having entered the first light transmissive member 51 at an angle larger than the critical angle is reflected off the first optical layer 52, returns to the wavelength converter 150, passes through the wavelength converter 150, enters the second light transmissive member 151, and exits via the second end surface 151d of the second light transmissive member 151. Fluorescence Y7 having entered the second light transmissive member 151 is reflected off the second optical layer 152 and exits via the second end surface 151d of the second light transmissive member 151. Part of the fluorescence passes through the wavelength converter 50 from the second light transmissive member 151, propagates through the interior of the first light transmissive member 51, and exits via the second end surface 51d.

The refractive indices of the first light transmissive member 51 and the second light transmissive member 151 are closer to the refractive index of air than the refractive index of the wavelength converter 150. In the light source apparatus 102 according to the present embodiment, the amount of fluorescence Y that exits via the second end surface 51d of the first light transmissive member 51 and the second end surface 151d of the second light transmissive member 151 is greater than the amount of fluorescence Y that exits via the second end surface 150d of the wavelength converter 150.

Part of fluorescence Y8 passes through the first light transmissive member 51, is reflected off the first optical layer 52, and is incident on the second end surface 150d of the wavelength converter 150. The fluorescence Y8 is totally reflected off the second end surface 150d, enters the second light transmissive member 151, is reflected off the second optical layer 152, and enters the wavelength converter 150 again. The fluorescence Y8 having returned to the wavelength converter 150 is scattered and therefore angularly converted by the wavelength converter 150, and eventually exits via the second end surface 51d of the first light transmissive member 51 or the second end surface 151d of the second light transmissive member 151.

In the light source apparatus 102 according to the present embodiment, the amount of excitation light E that enters the wavelength converter 150 is increased without an increase in the length of the wavelength converter 150 in the X-axis direction, so that the generated fluorescence Y can be efficiently drawn out with the fluorescence conversion efficiency increased, as the light source apparatus 101 according to the second embodiment, even when the wavelength converter 150 is configured with a transparent phosphor.

### Fourth Embodiment

The configuration of a projector according to a fourth embodiment will be subsequently described. The difference between the present embodiment and the first embodiment is the configuration of the light source apparatus. The configuration of the light source apparatus will therefore be primarily described below. Note that elements common to those in the first embodiment have the same reference characters and will not be described.

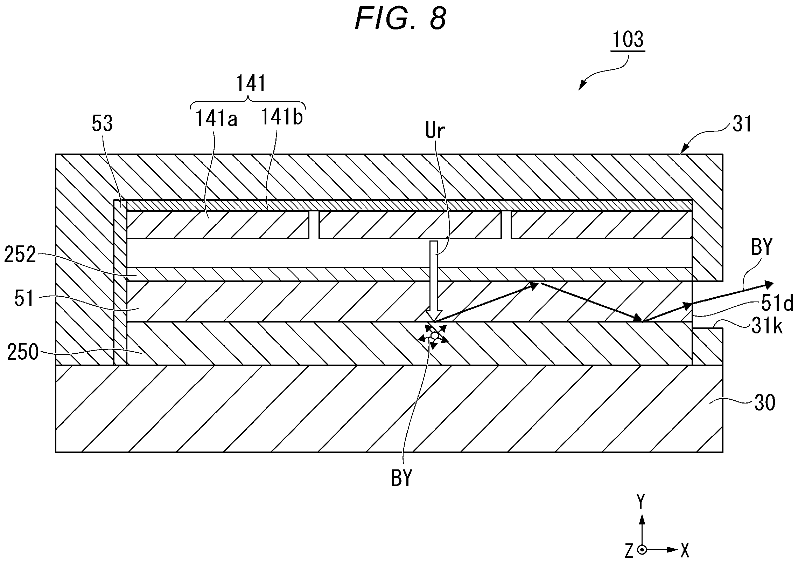

FIG. 8 is a cross-sectional view showing a schematic configuration of a light source apparatus 103 according to the present embodiment.

The light source apparatus 103 according to the present embodiment includes the support member 30, the enclosure 31, a first light source 141, a wavelength converter 250, the first light transmissive member 51, a first optical layer 252, the first reflective member 53, and a pair of second reflective members, as shown in FIG. 8.

The first light source 141 in the present embodiment includes multiple first light emitters 141a and a substrate 141b. The multiple first light emitters 141a are mounted on the substrate 141b. The number of first light emitters 141a is not limited to a specific number, and the first light source 141 may include only one first light emitter 141a.

The first light emitters 141a in the present embodiment each emit an excitation light beam within the first wavelength band. The first light emitters 141a are each constituted, for example, of a light emitting diode (LED). The first light emitters 141a each face the wavelength converter 250 and emits the excitation light beam toward the wavelength converter 250. The first wavelength band is, for example, an ultraviolet wavelength band ranging from 100 nm to 400 nm and has a peak wavelength of 380 nm. The multiple first light emitters 141a are arranged along the longitudinal direction of the wavelength converter 250. The first light source 141 in the present embodiment thus outputs ultraviolet light Ur containing the multiple excitation light beams.

The wavelength converter 250 in the present embodiment has the shape of an elongated plate extending along the X-axis and has six surfaces, as the wavelength converter 50 in the first embodiment.

The wavelength converter 250 in the present embodiment is configured with a blue phosphor that converts the ultraviolet light Ur output from the first light source 141 into blue fluorescence BY within a second wavelength band different from the first wavelength band, for example, a blue wavelength band ranging from 450 to 495 nm. The blue phosphor is made, for example, of BaMgAl₁₀O₁₇:Eu (II). The ultraviolet light Ur in the present embodiment corresponds to the "first light" in the claims, and the fluorescence BY corresponds to the "second light" in the claims.

The first optical layer 252 is disposed between the first light source 141 and the first light transmissive member 51, and has optical characteristics that cause the first optical layer 252 to transmit the ultraviolet light Ur and reflect the fluorescence BY.

The other configurations are the same as those of the light source apparatus 100 according to the first embodiment and will therefore not be described.

In the light source apparatus 103 according to the present embodiment, the fluorescence BY propagates through the interior of the first light transmissive member 51 while repeatedly scattered by the wavelength converter 250 and reflected off the first optical layer 252, and exits via the second end surface 51d.

The light source apparatus 103 can thus output the fluorescence BY generated by the wavelength converter 250 out of the enclosure 31 via the light drawing port 31k thereof.

The light source apparatus 103 according to the present embodiment, in which the fluorescence BY reflected off the first optical layer 252 is scattered in the wavelength converter 250, also allows the fluorescence BY having the changed angular distribution to propagate through the interior of the first light transmissive member 51. The fluorescence BY can therefore be incident on the second end surface 51d of the first light transmissive member 51 at an angle smaller than the critical angle.

The light source apparatus 103 according to the present embodiment can thus realize a configuration in which the fluorescence BY is efficiently drawn out as compared with a case where the fluorescence BY propagates through the interior of the first light transmissive member 51 while being totally reflected.

Furthermore, the light source apparatus 103 according to the present embodiment, which includes the first light source 41 using the first light emitters 141a each configured with an LED, generates heat less than the heat generated by a light source apparatus using multiple blue semiconductor lasers, and can use a cooling apparatus having a downsized configuration.

Moreover, when a laser light source of related art is used, a light combining system using a mirror, a prism, or other optical elements is required to achieve an increase in the amount of blue light, resulting in a problem of a tendency toward larger sizes the apparatus configuration. In contrast, the light source apparatus 103 according to the present embodiment, in which the amount of blue light can be increased by increasing the length of the wavelength converter 250 and increasing the number of first light emitters 141a, provides another advantage of suppression of an increase in the size of the apparatus configuration.

The technical scope of the present disclosure is not limited to the embodiments described above, and a variety of changes can be made thereto without departing from the intent of the present disclosure. An aspect of the present disclosure can be achieved by an appropriate combination of the characteristic portions in the embodiments described above.

In addition, the specific components of the shape, the number, the arrangement, the materials, and other factors of the elements of the light source apparatus and the projector are not limited to those in the embodiments described above and can be changed as appropriate. The aforementioned embodiments have been described with reference to the case where any of the light source apparatuses according to the present disclosure is incorporated in a projector using liquid crystal panels, but not necessarily. Any of the light source apparatuses according to the present disclosure may be incorporated in a projector using digital micromirror devices as the light modulators. The projector may not include multiple light modulators and may instead include only one light modulator.

Any of the light source apparatuses according to the present disclosure may be used as a lighting apparatus, a headlight of an automobile, and other components.

### Summary of present disclosure

The present disclosure will be summarized below as additional remarks.

### Additional remark 1

A light source apparatus including: a first light source configured to output first light within a first wavelength band; a wavelength converter configured to convert the first light into second light within a second wavelength band different from the first wavelength band; a first light transmissive member disposed between the first light source and the wavelength converter and configured to guide the second light into which the first light is converted by the wavelength converter; a first optical layer disposed between the first light source and the first light transmissive member and configured to transmit the first light and reflect the second light; and a first reflective member configured to reflect the first light and the second light, wherein the wavelength converter has a first surface on which the first light is incident via the first optical layer and the first light transmissive member, the first light transmissive member has a second surface that faces the first surface, and a third surface and a fourth surface that intersect with the second surface and face opposite sides, the third surface faces the first reflective member, and the second light into which the first light is converted by the wavelength converter travels through an interior of the first light transmissive member and exits via the fourth surface.

The light source apparatus having the configuration described in Additional remark 1, in which the second light reflected off the first optical layer is scattered in the wavelength converter, allows the second light having a changed angular distribution to propagate through the interior of the first light transmissive member. The second light can therefore be incident on the fourth surface of the first light transmissive member at an angle smaller than the critical angle. The light source apparatus having the configuration described above allows the second light to be efficiently drawn out as compared with a case where the second light propagates through the interior of the first light transmissive member while being totally reflected.

### Additional remark 2

The light source apparatus according to Additional remark 1, wherein a refractive index of the first light transmissive member is smaller than a refractive index of the wavelength converter.

According to the configuration described in Additional remark 2, when the second light is incident on the first light transmissive member from the wavelength converter, the first light transmissive member refracts the second light, so that the angle of the second light with respect to the longitudinal axis of the first light transmissive member decreases. That is, the second light propagating through the interior of the first light transmissive member is incident on the fourth surface perpendicular to the longitudinal axis at a small angle. The first light transmissive member can therefore efficiently output the second light via the fourth surface.

### Additional remark 3

The light source apparatus according to Additional remark 1 or 2, wherein thermal conductivity of the first light transmissive member is greater than thermal conductivity of the wavelength converter.

The configuration described in Additional remark 3, in which the heat of the wavelength converter is efficiently transferred to the first light transmissive member, can suppress an increase in the temperature of the wavelength converter. A decrease in light emission efficiency due to an increase in the temperature of the wavelength converter can thus be suppressed.

### Additional remark 4

The light source apparatus according to any one of Additional remarks 1 to 3, wherein the first light transmissive member and the wavelength converter are fixed to each other with a light transmissive adhesive.

According to the configuration described in Additional remark 4, the optical adhesive can transmit the first light having passed through the first light transmissive member and cause the first light to efficiently enter the wavelength converter, and can also transmit the second light emitted from the wavelength converter and cause the second light to efficiently enter the first light transmissive member.

### Additional remark 5

The light source apparatus according to any one of Additional remarks 1 to 4, further including a second reflective member configured to reflect the first light and the second light, wherein the first light transmissive member further has a fifth surface and a sixth surface that intersect with the second surface, the third surface, and the fourth surface, and face opposite sides, and the second reflective member is disposed so as to face the fifth surface and the sixth surface.

The configuration described in Additional remark 5, in which the second reflective member reflects the first light, can increase the efficiency at which the first light is converted into the second light. In addition, since the second reflective member reflects the second light, the efficiency at which the second light is extracted can be increased.

### Additional remark 6

The light source apparatus according to any one of Additional remarks 1 to 5, further including a support member configured to support the wavelength converter, wherein the wavelength converter has a seventh surface that faces a side opposite to the first surface, and the seventh surface is coupled to the support member in a heat transferrable manner.

The configuration described in Additional remark 6, in which the heat of the wavelength converter is dissipated via the support member, can suppress an increase in the temperature of the wavelength converter. The efficiency at which the wavelength converter converts the second light can therefore be increased.

### Additional remark 7

The light source apparatus according to any one of Additional remarks 1 to 6, further including an enclosure configured to cover the first optical layer, the first light transmissive member, and the wavelength converter, wherein the enclosure has a light drawing port via which the second light that exits via the fourth surface of the first light transmissive member is drawn out of the enclosure, and the light drawing port overlaps with the first light transmissive member and the wavelength converter in a plan view of the enclosure viewed in a direction of a normal to the fourth surface.

The configuration described in Additional remark 7, which includes the enclosure, can suppress adhesion of dust and other foreign matter to the first optical layer, the first light transmissive member, and the wavelength converter. Furthermore, the second light can be efficiently drawn out of the enclosure via the light drawing port.

### Additional remark 8

The light source apparatus according to any one of Additional remarks 1 to 7, further including: a second light source disposed at a side opposite to the first light source with respect to the wavelength converter and configured to output the first light; a second light transmissive member disposed between the second light source and the wavelength converter and configured to guide the second light into which the first light is converted by the wavelength converter; and a second optical layer disposed between the second light source and the second light transmissive member and configured to transmit the first light and reflect the second light, wherein the wavelength converter has a seventh surface on which the first light output from the second light source is incident via the second optical layer and the second light transmissive member and which faces a side opposite to the first surface, the second light transmissive member has an eighth surface that faces the seventh surface, and a ninth surface and a tenth surface that intersect with the eighth surface and face opposite sides, the ninth surface faces the first reflective member, and the second light into which the first light is converted by the wavelength converter travels through an interior of the second light transmissive member and exits via the tenth surface.

The configuration described in Additional remark 8, which causes the first light to be incident both on the first surface and the seventh surface of the wavelength converter, allows an increase in the amount of first light that enters the wavelength converter. Since it becomes more difficult to draw out the second light generated at the side opposite to the light drawing side as the length of the wavelength converter increases, the second light may not be efficiently drawn out, for example, when the area on which the first light is incident is increased by increasing the length of the wavelength converter. In contrast, the configuration described above, in which the amount of first light that enters the wavelength converter is increased without an increase in the length of the wavelength converter, allows the generated second light to be efficiently drawn out with the efficiency at which the first light is converted into the second light increased.

### Additional remark 9

The light source apparatus according to Additional remark 8, further including an enclosure configured to accommodate the first optical layer, the second optical layer, the first light transmissive member, the second light transmissive member, and the wavelength converter, wherein the enclosure has a light drawing port via which the second light that exits via the fourth surface and the tenth surface is drawn out of the enclosure, and the light drawing port overlaps with the first light transmissive member, the wavelength converter, and the second light transmissive member in a plan view of the enclosure viewed in a direction of a normal to the fourth surface.

The configuration described in Additional remark 9, which includes the enclosure, can suppress adhesion of dust and other foreign matter to the first optical layer, the second optical layer, the first light transmissive member, the second light transmissive member, and the wavelength converter. Furthermore, the second light can be efficiently drawn out of the enclosure via the light drawing port.

### Additional remark 10

The light source apparatus according to any one of Additional remarks 1 to 9, wherein the wavelength converter is configured with a transparent phosphor.

The configuration described in Additional remark 10, in which the amount of first light that enters the wavelength converter is increased without an increase in the length of the wavelength converter, allows the generated second light to be efficiently drawn out with the efficiency at which the first light is converted into the second light increased even when the wavelength converter is configured with a transparent phosphor.

### Additional remark 11

The light source apparatus according to any one of Additional remarks 1 to 9, wherein the wavelength converter is configured with a light scattering phosphor.

The configuration described in Additional remark 11, in which the wavelength converter is configured with a light scattering phosphor, allows the second light to propagate through the interior of the first light transmissive member while repeatedly scattered by the wavelength converter and reflected off the first optical layer and efficiently exit via the fourth surface.

### Additional remark 12

The light source apparatus according to Additional remark 11, wherein the wavelength converter is a yellow phosphor, the first light is blue light, the second light is yellow fluorescence, and the fluorescence propagates through the interior of the first light transmissive member while repeatedly scattered by the wavelength converter and reflected off the first optical layer and exits via the fourth surface.

The configuration described in Additional remark 12 allows the yellow fluorescence generated in the wavelength converter to be efficiently drawn out via the fourth surface.

### Additional remark 13

The light source apparatus according to Additional remark 11, wherein the wavelength converter is a blue phosphor, the first light is ultraviolet light, the second light is blue fluorescence, and the fluorescence propagates through the interior of the first light transmissive member while repeatedly scattered by the wavelength converter and reflected off the first optical layer and exits via the fourth surface.

The configuration described in Additional remark 13 allows the blue fluorescence generated in the wavelength converter to be efficiently drawn out via the fourth surface.

### Additional remark 14

A projector including: the light source apparatus according to any one of Additional remarks 1 to 13; a light modulator configured to modulate light from the light source apparatus; and a projection optical apparatus configured to project the light modulated by the light modulator.

The projector having the configuration described in Additional remark 14, which includes the light source apparatus configured to efficiently extract light, can be a projector that excels in light use efficiency.

## Claims

1. A light source apparatus comprising:
a first light source configured to emit first light within a first wavelength band;
a wavelength converter configured to convert the first light into second light within a second wavelength band different from the first wavelength band;
a first light transmissive member disposed between the first light source and the wavelength converter and configured to guide the second light into which the first light is converted by the wavelength converter;
a first optical layer disposed between the first light source and the first light transmissive member and configured to transmit the first light and reflect the second light; and
a first reflective member configured to reflect the first light and the second light,
wherein the wavelength converter has a first surface on which the first light is incident via the first optical layer and the first light transmissive member,
the first light transmissive member has a second surface that faces the first surface, and a third surface and a fourth surface that intersect with the second surface and face opposite sides,
the third surface faces the first reflective member, and
the second light into which the first light is converted by the wavelength converter travels through an interior of the first light transmissive member and exits via the fourth surface.

2. The light source apparatus according to claim 1,
wherein a refractive index of the first light transmissive member is smaller than a refractive index of the wavelength converter.

3. The light source apparatus according to claim 1 or 2,
Wherein a thermal conductivity of the first light transmissive member is greater than a thermal conductivity of the wavelength converter.

4. The light source apparatus according to any one of claims 1 to 3,
wherein the first light transmissive member and the wavelength converter are fixed to each other with a light transmissive adhesive.

5. The light source apparatus according to any one of claims 1 to 4, further comprising
a second reflective member configured to reflect the first light and the second light,
wherein the first light transmissive member further has a fifth surface and a sixth surface that intersect with the second surface, the third surface, and the fourth surface, and face opposite sides, and
the second reflective member is disposed so as to face the fifth surface and the sixth surface.

6. The light source apparatus according to any one of claims 1 to 5, further comprising
a support member configured to support the wavelength converter,
wherein the wavelength converter has a seventh surface that faces a side opposite to the first surface, and
the seventh surface is coupled to the support member in a heat transferrable manner.

7. The light source apparatus according to any one of claims 1 to 6, further comprising
an enclosure configured to cover the first optical layer, the first light transmissive member, and the wavelength converter,
wherein the enclosure has a light drawing port via which the second light that exits via the fourth surface of the first light transmissive member is drawn out of the enclosure, and
the light drawing port overlaps with the first light transmissive member and the wavelength converter in a plan view of the enclosure viewed in a direction of a normal to the fourth surface.

8. The light source apparatus according to any one of claims 1 to 7, further comprising:
a second light source disposed at a side opposite to the first light source with respect to the wavelength converter and configured to emit the first light;
a second light transmissive member disposed between the second light source and the wavelength converter and configured to guide the second light into which the first light is converted by the wavelength converter; and
a second optical layer disposed between the second light source and the second light transmissive member and configured to transmit the first light and reflect the second light,
wherein the wavelength converter has a seventh surface on which the first light emitted from the second light source is incident via the second optical layer and the second light transmissive member and which faces a side opposite to the first surface,
the second light transmissive member has an eighth surface that faces the seventh surface, and a ninth surface and a tenth surface that intersect with the eighth surface and face opposite sides,
the ninth surface faces the first reflective member, and
the second light into which the first light is converted by the wavelength converter travels through an interior of the second light transmissive member and exits via the tenth surface.

9. The light source apparatus according to claim 8, further comprising
an enclosure configured to accommodate the first optical layer, the second optical layer, the first light transmissive member, the second light transmissive member, and the wavelength converter,
wherein the enclosure has a light drawing port via which the second light that exits via the fourth surface and the tenth surface is drawn out of the enclosure, and
the light drawing port overlaps with the first light transmissive member, the wavelength converter, and the second light transmissive member in a plan view of the enclosure viewed in a direction of a normal to the fourth surface.

10. The light source apparatus according to any one of claims 1 to 9,
wherein the wavelength converter is configured with a transparent phosphor.

11. The light source apparatus according to any one of claims 1 to 9,
wherein the wavelength converter is configured with a light scattering phosphor.

12. The light source apparatus according to claim 11,
wherein the wavelength converter is a yellow phosphor,
the first light is blue light,
the second light is yellow fluorescence, and
the fluorescence propagates through the interior of the first light transmissive member while repeatedly scattered by the wavelength converter and reflected off the first optical layer and exits via the fourth surface.

13. The light source apparatus according to claim 11,
wherein the wavelength converter is a blue phosphor,
the first light is ultraviolet light,
the second light is blue fluorescence, and
the fluorescence propagates through the interior of the first light transmissive member while repeatedly scattered by the wavelength converter and reflected off the first optical layer and exits via the fourth surface.

14. A projector comprising:
the light source apparatus according to any one of claims 1 to 13;
a light modulator configured to modulate light emitted from the light source apparatus; and
a projection optical apparatus configured to project the light modulated by the light modulator.
